# DEMANDE DE BREVET EUROPEEN

(11) **EP 3 766 662 A1**
(43) Date de publication de la demande: **20.01.2021**
(21) Numéro de dépôt: 20305828.4
(22) Date de dépôt: 17.07.2020
(51) Int. Cl.: B29C 53/06, E04F 19/02, E04F 19/04, B29L 31/10

(54) **BANDE SOUPLE ET ALLONGEE POUR LA FORMATION D'AU MOINS UN PROFILE**

(30) Priorité: 17.07.2019 FR 1908053
(71) Demandeur: Briconord, 16300 Barbezieux-Saint Hilaire (FR)
(72) Inventeur: PRADIGNAC, Marc, 16300 BARRET (FR)
(74) Mandataire: Plasseraud IP

(57) **Abrégé**

La présente invention concerne une bande (10) souple et allongée, ladite bande (10) présentant un axe longitudinal. Selon l'invention,
- au moins une ligne de pliage (11) est ménagée dans ladite bande (10) le long de, ou sensiblement le long de, son axe longitudinal,
- ladite bande (10) étant configurée pour être déformable à froid le long de chaque ligne de pliage afin de former par pliage de ladite bande (10) le long de ladite ou d'une ou plusieurs desdites lignes de pliage, un profilé ayant une section transversale droite prédéterminée, et
- ladite bande (10) comportant une âme (13) en matière plastique, une des faces de ladite bande (10) comporte un film adhésif (15) pour assurer l'adhésion dudit profilé obtenu à un supporte.

## Description

### Domaine technique

La présente invention concerne une bande de matière plastique comportant une ou plusieurs lignes de pliage s'étendant le long de sa dimension longitudinale et autorisant par une étape de conformation à froid, la formation d'un profilé stable, différentes formes de sections droites de profilés étant réalisables avec une même bande.

Elle concerne également un procédé de fabrication d'une telle bande.

### Technique antérieure

Des profilés dits de finition sont largement utilisés dans le domaine de la construction ou de la rénovation.

De tels profilés sont notamment mis en œuvre pour obtenir une finition parfaite en venant masquer des irrégularités, protéger des arêtes contre des dommages mécaniques ou encore habiller un angle.

Les profilés en matière plastique sont typiquement produits en continu par un procédé d'extrusion-soufflage pour des raisons évidentes de rentabilité.
Ils sont coupés à la longueur souhaitée par un dispositif de coupe placé en sortie de l'extrudeuse.

Ces profilés sont typiquement commercialisés dans des dimensions standards, présentant une grande dimension longitudinale.

On constate donc de nombreux inconvénients liés à l'exploitation commerciale de ces profilés, ainsi qu'à leur mise en œuvre finale par un utilisateur.

Tout d'abord, les entreprises commercialisant de tels profilés offrent à la vente autant de produits que de sections de profilés différentes, ce qui nécessite une logistique de stockage et de référencement développée.
Un utilisateur peu averti, rencontre par conséquent des problèmes de choix en raison de nombreux produits référencés.

Par ailleurs, et compte tenu de la grande dimension longitudinale de ces profilés, ils sont encombrants et leur mise en place dans des rayons est complexe et consommatrice en espace de vente.

En outre, pour l'utilisateur final, ces profilés sont inesthétiques et présentent une tendance à la torsion lors de leur manipulation en raison de leur grande dimension longitudinale.

D'autre part, un utilisateur final doit gérer la dimension longitudinale standardisée de tels profilés, soit parce que celle-ci est trop courte par rapport à ses besoins exprimés, soit au contraire parce qu'il lui restera une ou plusieurs chutes.

Au surplus, les profilés de l'état de l'art sont généralement fournis en étant dépourvus de tout adhésif de sorte qu'une étape complexe d'encollage est nécessaire.

Aussi, il serait intéressant de disposer d'un profilé, dont la conception originale permette de surmonter les inconvénients ci-dessus mentionnés.

### Objet de l'invention

La présente invention vise une bande souple et allongée, simple dans sa conception et dans son mode opératoire, économique, permettant par sa découpe à la dimension souhaitée et par sa déformation à froid de réaliser un profilé ayant la forme et la dimension longitudinale souhaitées.

Un autre objet de la présente invention est une telle bande qui autorise sa mise en forme en des profilés ayant des sections transverses de formes différentes, notamment cornière d'angle régulière ou irrégulière, plat, en U, et autre...

Encore un objet de la présente invention est une telle bande qui présente un encombrement réduit dans sa configuration initiale, et permette ainsi d'optimiser sa mise en place dans des rayons ainsi que son stockage.

Encore un autre objet de la présente invention est une telle bande qui facilite son identification par un utilisateur final et donc le passage à l'acte d'achat.

Elle concerne encore un procédé de fabrication particulièrement simple et économique d'une telle bande.

### Exposé de l'invention

A cet effet, l'invention concerne une bande souple et allongée, cette bande présentant un axe longitudinal.

Selon l'invention,
- au moins une ligne de pliage est ménagée dans ladite bande le long de, ou sensiblement le long de, son axe longitudinal,
- ladite bande étant configurée pour être déformable à froid le long de chaque ligne de pliage afin de former par pliage de ladite bande le long de ladite ou d'une ou plusieurs desdites lignes de pliage, un profilé ayant une section transversale droite prédéterminée, ledit profilé étant alors dans un état stable, et
- ladite bande comportant une feuille réalisée dans une seule matière plastique, une des faces de ladite feuille est recouverte au moins en partie par un film adhésif pour assurer l'adhésion dudit profilé obtenu à un support, chaque ligne de pliage étant uniquement obtenue par déformation mécanique de ladite bande.

Cette déformation mécanique qui résulte avantageusement d'un écrasement local de la bande pour former chaque ligne de pliage permet de conserver l'intégralité de la matière de la bande.
Ainsi, et contrairement à une incision ou découpe qui serait réalisée dans la bande au moyen d'un outil coupant, il n'y a pas d'enlèvement de matière. De manière avantageuse, on observe alors aucune amorce de rupture dans la bande. Cette bande conserve notamment sa résistance mécanique initiale.

De manière avantageuse, cette bande est monobloc et pleine.

Avantageusement, ledit film adhésif recouvre l'entière face de ladite bande pour assurer une parfaite adhésion du profilé sur des surfaces difficiles et irrégulières.

La ou les lignes de pliage ménagées dans cette bande et non utilisées en service, étant non débouchantes, le profilé obtenu par pliage de cette bande présente une rigidité mécanique suffisante et un état final stable.
Chaque ligne de pliage est avantageusement réalisée pour former un angle net. A cet effet, la largeur et la profondeur de l'ouverture longitudinale réalisée dans le ou les matériaux constitutifs de la bande pour former chaque ligne de pliage sont déterminées pour optimiser la rigidité et la facilité de mise en forme de la bande. On choisira à titre purement illustratif, une largeur de ligne de pliage inférieure typiquement à quelques millimètres, et encore mieux inférieure à l'épaisseur de cette bande.

Selon un mode de réalisation particulier de cette bande souple et allongée, elle comporte au moins deux lignes de pliage ménagées dans ladite bande le long de, ou sensiblement le long de, son axe longitudinal, pour permettre de réaliser avec une même bande, des profilés ayant des sections transverses droites de formes différentes.
L'intérêt de fournir une bande en matière plastique présentant plusieurs lignes de pliage, c'est-à-dire au moins deux lignes, de préférence trois ou quatre, est de permettre à l'utilisateur final de choisir, avec une même et seule bande, la forme de la section transversale qu'il souhaite donner au profilé obtenu par pliage de cette bande et cela parmi une gamme de possibilités prédéterminées.
De manière avantageuse, les lignes de pliage sont ainsi agencées sur la bande pour permettre la réalisation de profilés ayant des sections de formes différentes telles qu'une cornière d'angle régulière ou irrégulière (i.e. les dimensions des deux ailes de la cornière sont différentes), un profil en U, un plat, un profil en marche ou en Z pour un rattrapage de niveau entre deux surfaces planes, un profilé ayant des angles entrants ou sortants, ....

Selon un autre mode de réalisation particulier de cette bande souple et allongée, elle est constituée de ladite feuille réalisée dans une seule matière plastique, du film adhésif pour assurer l'adhésion dudit profilé obtenu à un support et, de préférence, d'une ou plusieurs couches choisies parmi une couche métallique, une couche imprimée ou encore une couche de vernis recouvrant la face de ladite feuille opposée à celle recevant ledit film adhésif.
Ainsi, dans sa version la plus simple de cette bande, elle peut être constituée d'une feuille réalisée dans une seule matière plastique, une face de cette feuille étant recouverte au moins en partie d'un film adhésif.

Selon encore un autre mode de réalisation particulier de cette bande souple et allongée, ladite feuille est réalisée dans une matière thermoplastique dont le module d'élasticité est compris entre 1,8 et 2,5 Gpa, et encore mieux égal à environ 2,2 Gpa.

Avantageusement, il s'agit ainsi d'une matière thermoplastique semi-rigide apte à assurer la stabilité du profilé dans le temps après que ce dernier ait été formé par pliage de la bande le long d'au moins une ligne de pliage.

De préférence, ladite feuille est réalisée en polychlorure de vinyle (PVC), en acrylonitrile butadiène styrène (ABS) ou en polypropylène (PP).

Selon encore un autre mode de réalisation particulier de cette bande souple et allongée, chaque ligne de pliage obtenue par déformation mécanique de la bande est un sillon dans la bande, dont la profondeur est comprise entre dix (10) et trente-trois (33) pourcents de l'épaisseur de la bande.
Encore mieux, la profondeur de chaque ligne de pliage est comprise entre un quart et un tiers de l'épaisseur de la bande.
A titre purement illustratif, pour une bande présentant une épaisseur de 0,4 mm, la profondeur du sillon est avantageusement de l'ordre de 0,1 mm.

Selon encore un autre mode de réalisation particulier de cette bande souple et allongée, chaque ligne de pliage est une ligne de moindre résistance mécanique ou une ligne de marquage obtenue par déformation mécanique de ladite bande au moyen d'au moins un outil.
Chaque ligne de pliage est ainsi avantageusement une zone de la bande mécaniquement affaiblie, encore appelée ligne de moindre résistance mécanique.
A titre purement illustratif, une telle ligne peut être obtenue par déformation d'une zone plastique de la bande au moyen d'au moins un outil externe. Par exemple, cet outil peut être un disque dont la surface externe annulaire amincie, ou encore en forme de poinçon annulaire, permet d'écraser ladite bande au droit de cette surface annulaire externe pour y former une ouverture longitudinale. Cette ouverture longitudinale étant non traversante, il subsiste suffisamment de matière dans l'épaisseur de la bande au droit de celle-ci pour assurer à cette dernière une certaine rigidité mécanique et un état stable du profilé obtenu par pliage de la bande.
Bien entendu, la formation de chaque ligne de pliage dans la bande pourrait être obtenue par des moyens différents tels qu'un faisceau laser, par exemple.

Plusieurs conformations sont possibles pour chaque ligne de pliage en fonction de la forme de profilé à obtenir. La section transverse et les dimensions de chaque ouverture longitudinale déterminant une ligne de pliage, pourront ainsi être identiques ou non en fonction des besoins.
A titre purement illustratif, le profil de l'ouverture longitudinale réalisée dans l'épaisseur de la bande pour y former une ligne de pliage pourra être en forme de V de sorte que le pliage de la bande le long de cette ligne de pliage assure l'obtention d'un angle droit.

Selon encore un autre mode de réalisation particulier de cette bande souple et allongée, ladite bande étant plane ou sensiblement plane, elle présente une configuration initiale enroulée sur elle-même.
Une telle configuration assure avantageusement une compacité augmentée au produit final et autorise une optimisation de sa logistique et de la présentation à la vente du produit.

Selon encore un autre mode de réalisation particulier de cette bande souple et allongée, la face de ladite bande opposée à celle comportant ledit film adhésif, présente un relief de surface (gaufrage, grainage, ...) et/ou comporte une ou plusieurs couches choisies parmi une couche métallique, une couche imprimée ou encore une couche de vernis,

Selon encore un autre mode de réalisation particulier de cette bande souple et allongée, ledit film adhésif est sensible à la pression,

Selon encore un autre mode de réalisation particulier de cette bande souple et allongée, ledit film adhésif est recouvert d'une pellicule pelable assurant sa protection,

Selon encore un autre mode de réalisation particulier de cette bande souple et allongée, cette bande présente une épaisseur comprise entre 0,25 mm et 0,8 mm.
De préférence, on pourra prendre une épaisseur de bande comprise entre 0,4 et 0,6 mm qui représente un bon compromis en termes de facilité de mise en œuvre (conformation, découpe aisée, ...) et de rigidité.

La présente invention concerne aussi l'utilisation d'une bande telle que décrite précédemment pour former un ou plusieurs profilés, chacun desdits profilés étant dans un état stable et étant obtenu par pliage de ladite bande le long de ladite ou d'une ou plusieurs desdites lignes de pliage.

De manière avantageuse, la mise en forme de cette bande est uniquement obtenue par pliage de celle-ci, c'est-à-dire par déformation à froid, le long d'une ou plusieurs lignes de pliage s'étendant longitudinalement. Une telle mise en forme est par conséquent très aisée puisqu'aucune autre étape préparatoire (chauffage, découpe, ...) n'est requise.
De préférence, cette mise en forme de ladite bande est réalisée par simple application d'une pression manuelle, c'est-à-dire l'application d'une force typiquement inférieure à 15 N/cm, et encore mieux inférieure à 10 N/cm.

La présente invention concerne également un procédé de fabrication d'une bande telle que décrite précédemment. Selon l'invention, on réalise les étapes suivantes :
- fournir une bande souple, allongée et ayant un axe longitudinal, ladite bande comprenant une âme en matière plastique, une des faces de ladite bande comportant un film adhésif, et
- former au moins une ligne de pliage s'étendant le long de, ou sensiblement le long de, l'axe longitudinal de ladite bande par déformation mécanique de cette dernière au moyen d'au moins un outil.

Cette déformation mécanique est de préférence assurée par un écrasement local de la bande.

Cette bande est ainsi monobloc et pleine. L'âme est par exemple réalisée en matière thermoplastique, et encore mieux en polychlorure de vinyle (PVC) ou en polypropylène (PP).

Selon un mode de réalisation particulier de ce procédé de fabrication, la formation d'au moins une ligne de pliage est réalisée tandis que le film adhésif est recouvert par une pellicule pelable de protection.

Selon un autre mode de réalisation particulier de ce procédé de fabrication, chaque ligne de pliage est formée par passage de ladite bande entre deux disques mobiles, placées en vis-à-vis et agencées de manière à assurer l'écrasement de ladite bande au droit desdits disques.

La surface active de chacun de ces disques déterminant la largeur de chaque ligne de pliage, ces disques présentent une surface périphérique externe se réduisant ou encore en pointe.

Selon encore un autre mode de réalisation de ce procédé de fabrication, ladite bande est alimentée en continu puis coupée à la dimension souhaitée par un outil de découpe de sorte que chaque ligne de pliage est continue.

### Brève description des dessins

D'autres avantages, buts et caractéristiques particulières de la présente invention ressortiront de la description qui va suivre, faite, dans un but explicatif et nullement limitatif, en regard des dessins annexés, dans lesquels:
**Fig. 1**

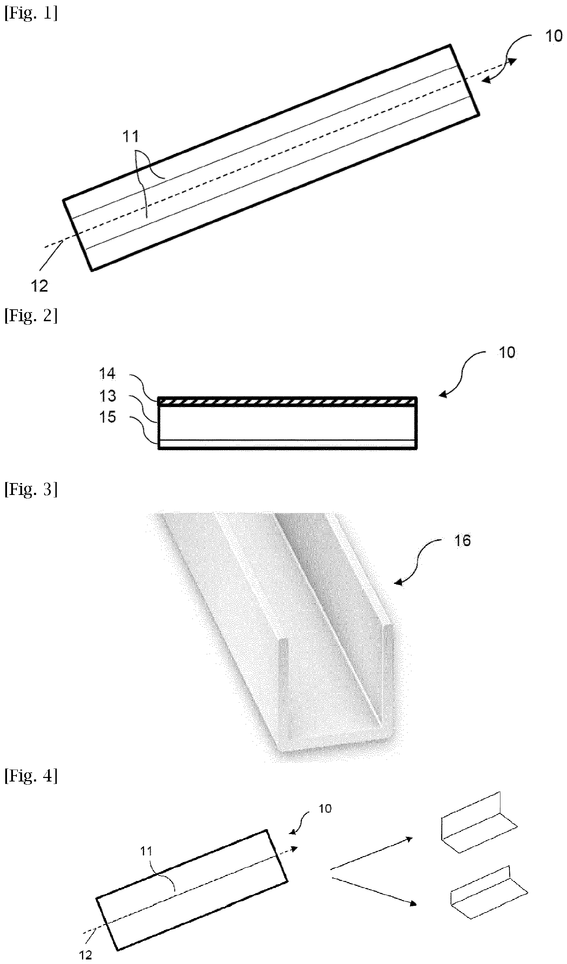

   [Fig. 1] est une représentation schématique en vue de dessus d'une bande souple et allongée, selon un mode de réalisation particulier de la présente invention ;
**Fig. 2**
   [Fig. 2] est une vue en coupe transversale de la bande illustrée à la Figure 1 ;
**Fig. 3**
   [Fig. 3] est une vue partielle et en perspective d'un profilé ayant une section droite en forme de U obtenu par pliage manuel de la bande illustrée à la Figure 1 ;
**Fig. 4**
   [Fig. 4] montre des exemples de profilés obtenus par pliage manuel d'une bande comportant une seule ligne de pliage ;
**Fig. 5**

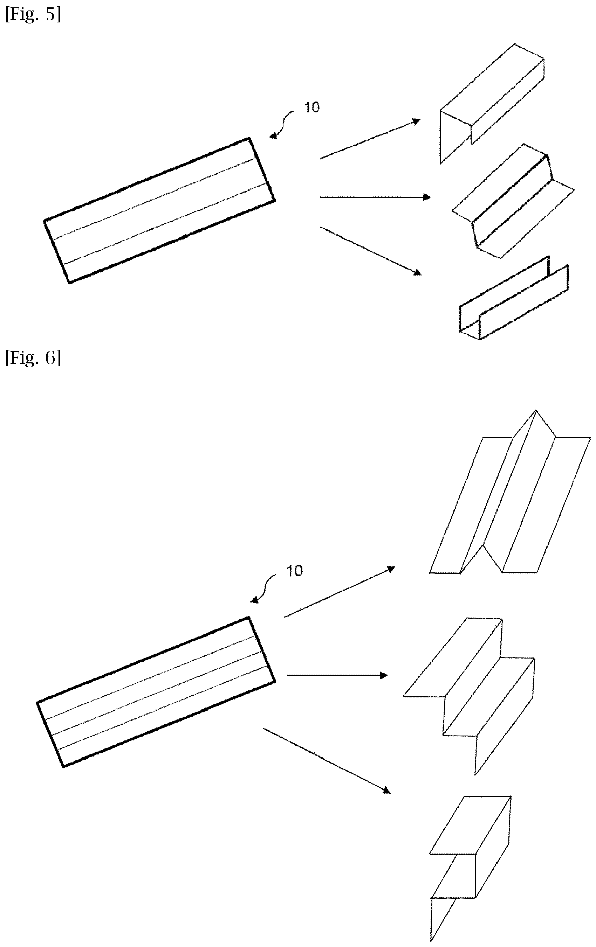

   [Fig. 5] montre des exemples de profilés obtenus par pliage manuel d'une bande comportant deux lignes de pliage;
**Fig. 6**
   [Fig. 6] montre des exemples de profilés obtenus par pliage manuel d'une bande comportant trois lignes de pliage ;

### Description des modes de réalisation

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Tout d'abord, on note que les figures ne sont pas à l'échelle.

Les Figures 1 à 3 représentent schématiquement une bande souple et allongée en matière plastique selon un mode de réalisation particulier de la présente invention.

Cette bande 10 comporte deux lignes de pliage 11 qui sont ménagées dans cette dernière le long de, ou sensiblement le long de, son axe longitudinal 12.

Cette bande 10 pleine et monobloc comporte ici une âme 13 centrale en matière thermoplastique, telle que du polychlorure de vinyle (PVC), et présente sur une première face, un revêtement 14 de protection tel qu'un laquage transparent et sur sa face opposée, une couche 15 adhésive sensible à la pression qui est protégée par une pellicule pelable.

Cette bande 10 étant pré-adhésivée, le profilé obtenu par pliage de celle-ci peut être directement posé sur un support sans qu'il soit nécessaire de réaliser d'étape supplémentaire.
De plus, la couche 15 adhésive recouvre entièrement cette face opposée de sorte qu'il est aisé de fixer le profilé, même sur des surfaces présentant des irrégularités.

A titre purement illustratif, cette bande présente ici une épaisseur de 0,4 mm et une longueur de 2,6 mètres. Dans sa configuration stable initiale, c'est-à-dire lorsqu'elle sort d'usine, cette bande plate est enroulée sur elle-même pour former un rouleau et ainsi optimiser son encombrement, et par conséquent, son conditionnement, son stockage et sa mise en rayonnage.

Cette bande est avantageusement configurée pour être déformable à froid le long de chaque ligne de pliage afin de former par pliage de cette bande le long de d'une ou plusieurs de ces lignes de pliage, un profilé ayant une section transversale droite prédéterminée parmi une gamme de sections de profilés possibles.
Le profilé ainsi obtenu est avantageusement dans un état final stable

A titre purement d'exemple, la Figure 3 représente un profilé 16 ayant une section en forme de U obtenu par déformation à froid de la bande et pliage manuel de cette dernière le long des deux lignes de pliage 11.

Cette bande 10 peut être colorée par exemple en blanc mais toute autre couleur est possible. Elle peut encore présenter une surface imprimée avec un ou plusieurs motifs particuliers.

## Revendications

1. Bande souple et allongée, ladite bande présentant un axe longitudinal (12), **caractérisée en ce que** :
- au moins une ligne de pliage (11) est ménagée dans ladite bande (10) le long de, ou sensiblement le long de, son axe longitudinal (12),
- ladite bande (10) étant configurée pour être déformable à froid le long de chaque ligne de pliage afin de former par pliage de ladite bande (10) le long de ladite ou d'une ou plusieurs desdites lignes de pliage (11), un profilé ayant une section transversale droite prédéterminée, ledit profilé étant alors dans un état stable, et **en ce que**
- ladite bande (10) comportant une feuille réalisée dans une seule matière plastique, une des faces de ladite feuille est recouverte au moins en partie par un film adhésif (15) pour assurer l'adhésion dudit profilé obtenu à un support, chaque ligne de pliage étant uniquement obtenue par déformation mécanique de ladite bande (10).

2. Bande selon la revendication 1, **caractérisée en ce que** ladite bande est constituée de ladite feuille réalisée dans une seule matière plastique, dudit film adhésif (15) pour assurer l'adhésion dudit profilé obtenu à un support et, de préférence, d'une ou plusieurs couches choisies parmi une couche métallique, une couche imprimée ou encore une couche de vernis recouvrant la face de ladite feuille opposée à celle recevant ledit film adhésif (15).

3. Bande selon la revendication 1 ou 2, **caractérisée en ce que** ladite feuille est réalisée dans une matière thermoplastique dont le module d'élasticité est compris entre 1,8 et 2,5 Gpa.

4. Bande selon l'une quelconque des revendications 1 à 3, **caractérisée en ce que** ladite feuille est réalisée en polychlorure de vinyle (PVC), en acrylonitrile butadiène styrène (ABS) ou en polypropylène (PP).

5. Bande selon l'une quelconque des revendications précédentes, **caractérisée en ce que** chaque ligne de pliage (11) est un sillon dont la profondeur est comprise entre 10 et 33 pourcents de l'épaisseur de la bande (10).

6. Bande selon l'une quelconque des revendications précédentes, **caractérisée en ce qu'**elle comporte au moins deux lignes de pliage (11) ménagées dans ladite bande (10) le long de, ou sensiblement le long de, son axe longitudinal (12), pour permettre de réaliser avec une même bande (10), des profilés ayant des sections transverses droites de formes différentes.

7. Bande selon l'une quelconque des revendications précédentes, **caractérisée en ce que** ladite bande (10) étant plane ou sensiblement plane, elle présente une configuration initiale enroulée sur elle-même.

8. Bande selon l'une quelconque des revendications précédentes, **caractérisée en ce que** ladite bande (10) présente une épaisseur comprise entre 0,25 mm et 0,8 mm, de préférence entre 0,4 et 0,6 mm.

9. Utilisation d'une bande (10) selon l'une quelconque des revendications 1 à 7 pour former un ou plusieurs profilés, chacun desdits profilés étant dans un état stable et étant obtenu par pliage manuel de ladite bande (10) le long de ladite ou d'une ou plusieurs desdites lignes de pliage (11).

10. Procédé de fabrication d'une bande selon l'une quelconque des revendications 1 à 9, **caractérisé en ce qu'**on réalise les étapes suivantes :
- fournir une bande (10) souple, allongée et ayant un axe longitudinal (12), ladite bande (10) comprenant une âme (13) en matière plastique, une des faces de ladite bande (10) comportant un film adhésif (15), et
- former au moins une ligne de pliage (11) s'étendant le long de, ou sensiblement le long de, l'axe longitudinal (12) de ladite bande (10) par écrasement de cette dernière au moyen d'au moins un outil.

11. Procédé selon la revendication 10, **caractérisé en ce que** chaque ligne de pliage est formée par passage de ladite bande (10) entre deux disques mobiles, placées en vis-à-vis et agencées de manière à assurer l'écrasement de ladite bande au droit desdits disques.
